# FASCICULE DE BREVET EUROPEEN

(11) **EP 2 142 899 B1**
(45) Date de publication et mention de la délivrance du brevet: **24.02.2016**
(21) Numéro de dépôt: 08788096.9
(22) Date de dépôt: 01.04.2008
(51) Int. Cl.: G01L 19/08

(54) **MANOMÈTRE ÉLECTRONIQUE DE MESURE DE LA PRESSION**
ELEKTRONISCHES MANOMETER ZUR DRUCKMESSUNG
ELECTRONIC PRESSURE GAUGE FOR MEASURING PRESSURE

(30) Priorité: 03.05.2007 FR 0754842
(43) Date de publication de la demande: 13.01.2010
(73) Titulaire: L'Air Liquide Société Anonyme pour l'Etude et l'Exploitation des Procédés Georges Claude, 75007 Paris (FR); Air Liquide Medical Systems, 92182 Antony Cedex (FR)
(72) Inventeur: BLEYS, Christian, F-77000 Livy Sur Seine (FR); DECK, Philippe, F-93100 Montreuil (FR); PIN, Fabrice, F-78220 Viroflay (FR)
(74) Mandataire: De Cuenca, Emmanuel Jaime
(86) Numéro de dépôt international: PCT/FR2008/050570
(87) Numéro de publication internationale: WO 2008/139081

(56) Documents cités:
- WO-A-2004/053450
- WO-A-2005/093377
- WO-A-2006/065704
- WO-A-2006/074417
- DE-A1-102006 008 427
- US-A1- 2001 045 892
- US-B1- 6 229 448
- US-B1- 6 672 151

## Description

La présente invention concerne un manomètre électronique de mesure de la pression régnant à l'intérieur d'un récipient.

L'invention concerne notamment un manomètre électronique de mesure de la pression régnant à l'intérieur d'un récipient, notamment une bouteille de gaz sous pression, dans lequel le manomètre comprend au moins un capteur de pression, une unité électronique conformée pour l'acquisition, le stockage et le traitement de données, au moins un dispositif d'information apte à transmettre au moins une information.

Un tel manomètre est décrit par exemple dans le document FR2868160A1.

Le document US 6,672,151 B1 décrit un capteur d'une grandeur physique placé par défaut en mode de veille. Le capteur comprend un récepteur infrarouge pour commuter le capteur en mode actif à la réception d'un signal infrarouge. Le capteur comprend également un émetteur d'un signal infrarouge pour communiquer à distance la valeur de la grandeur physique détectée.

Le document WO 2004/053450 A1 décrit un capteur de pression comportant un émetteur sans fil d'un signal représentatif de la pression mesurée par le capteur.

Le document WO 2006/074417 A2 décrit un capteur de pression pourvu d'un émetteur radiofréquence pour la transmission sans fil de données.

Le document DE 10 2006 008427 A1 décrit un capteur de pression qui émet à distance des données.

Le document US 2001/0045892 A1 décrit un capteur de pression à émission de données sans fil.

Du fait de leurs réutilisations multiples, les bouteilles de fluide sont confrontées successivement à de nombreux cas d'utilisation avec des utilisateurs aux besoins différents.

Les informations affichées ou transmises par les manomètres individuels mesurant la pression dans des bouteilles ne sont pas adaptées aux situations d'utilisation.

Pour résoudre ce problème de tels manomètres électroniques nécessitent des interventions humaines multiples (actionnement de boutons, capteurs ou autres actionneurs). De ce fait, de tels manomètres doivent prévoir des moyens d'actionnement, d'interrogation ou de configuration qui augmentent la structure et donc le coût de tels dispositifs. Par ailleurs, les interventions sur de tels manomètres électroniques peuvent être la cause d'erreur de manipulation et augmentent la consommation électrique du manomètre.

Un but de la présente invention est de pallier tout ou partie des inconvénients de l'art antérieur relevés ci-dessus.

A cette fin, le manomètre selon l'invention, par ailleurs conforme à la définition générique qu'en donne le préambule ci-dessus, est essentiellement caractérisé en ce qu'il comporte une première radio comprenant un port de réception, la première radio étant reliée à l'unité électronique pour recevoir des données extérieures en vue de modifier le fonctionnement ou la configuration du manomètre.

Par ailleurs, des modes de réalisation de l'invention peuvent comporter l'une ou plusieurs des caractéristiques suivantes :
- l'unité électronique est conformée pour stocker et traiter des premières données dites statiques telles que des informations relatives à l'état ou à l'identité d'un récipient ou du fluide contenu dans ledit récipient, et en ce que la première radio est conformée pour recevoir des premières données statiques en vue de leur écriture ou réécriture dans unité électronique pour modifier le fonctionnement ou de la configuration du manomètre,
- le port de réception de la première radio est conformé pour lire des données modulées en fréquence et/ou modulées en intensité d'un champ magnétique extérieur à une première fréquence dite basse, comprise entre 50 et 300KHz,
- la première radio ou l'unité électronique comporte un filtre conformé pour filtrer une transmission simplifiée de données extérieures par rapport à du bruit en ne tenant compte que des signaux reçus ayant une durée de transmission supérieure à un seuil de préférence égal à 100 ms environ,
- le manomètre comporte un premier port d'émission radio relié à l'unité électronique pour émettre des informations à partir du manomètre,
- le premier port d'émission radio comprend un modulateur de champ magnétique conformé pour moduler un champ magnétique extérieur adressé au manomètre,
- le premier port d'émission appartient à la première radio, le premier port d'émission et le port de réception de la première radio ont une fréquence de fonctionnement sensiblement identique en émission et en réception,
- la manomètre comporte une seconde radio comprenant un port d'émission, la seconde radio étant reliée à l'unité électronique pour émettre sans fil des informations (P) notamment concernant le fonctionnement du manomètre,
- le port d'émission de la seconde radio est conformé pour émettre des données par modulation de fréquence et/ou modulation d'intensité d'un champ magnétique à une seconde fréquence dite haute, par exemple comprise entre 300Khz et 800 MHz,
- l'unité électronique est conformée pour commander l'émission d'informations par la seconde radio en réponse à un signal de commande reçu par la première radio,
- le manomètre électronique est alimenté par un système d'alimentation électrique sans fil,
- la première radio a une fréquence de communication de l'ordre de 125kHz,
- le manomètre comprend un dispositif d'information comprenant l'un ou plusieurs des éléments parmi : un écran d'affichage d'une information sous forme alphanumérique et/ou pictographique, un ou des voyants lumineux, un avertisseur sonore,
- le manomètre comprend au moins l'un parmi :un capteur relevant la température à proximité du manomètre, capteur de mouvement ou de déplacement, capteur de luminosité, un capteur sonore, un système de positionnement par satellite (GPS), au moins un interrupteur ou actionneur,
- les données extérieures aptes à être transmisses au manomètre en vue de modifier le fonctionnement ou la configuration du manomètre comprennent au moins l'un parmi : l'unité S.I. d'affichage d'une grandeur physique telle que la pression ou l'autonomie (durée ou volume), la taille du récipient sur lequel est connecté le manomètre, un numéro de série du récipient sur lequel est connecté le manomètre, la nature chimique du fluide stocké dans le récipient, un programme d'ordinateur de calcul d'une autonomie de fluide à partir d'une pression mesurée et éventuellement d'une température mesurée ,
- l'unité électronique est conformée pour réémettre une ou des données par la seconde radio des informations reçues par la première radio,
- les données extérieures comprennent des commandes d'actionnement pour déclencher une action de fonctionnement de la part du manomètre tel que : l'actionnement d'un compteur, émettre ou supprimer une alarme, modifier un affichage et/ou l'information affichée, modifier une fréquence de transmission via la seconde radio,
- la seconde radio a une fréquence de communication de l'ordre de 433MHz,
- la nature et/ou le contenu des données et informations sont modifiés automatiquement en fonction de l'utilisation en cours du manomètre par rapport à plusieurs modes de fonctionnement prédéfinis au moins par des valeurs de pression,
- la fréquence d'émission des informations est modifiable et éventuellement modifiée automatiquement en fonction de l'utilisation en cours du manomètre par rapport à plusieurs modes de fonctionnement prédéfinis au moins par des valeurs de pression,
- les informations ou données incluent tout ou partie des informations suivantes : un numéro d'identifiant du récipient et/ou d'un robinet ou robinet-détendeur monté sur le récipient et/ou du manomètre lui-même, le mode de fonctionnement en cours du récipient, l'application informatique de commande du manomètre stocké dans l'unité électronique, un numéro de version de programme de commande du manomètre stocké dans l'unité électronique, la valeur de contenance maximale du récipient, la valeur de pression actuelle mesurée, le volume de fluide courant calculé dans le récipient, une durée d'autonomie calculée à partir de la pression courante mesurée, le type de récipient ou de détendeur rapporté sur le récipient parmi plusieurs types prédéfinis, le niveau de charge de l'alimentation électrique du manomètre, l'état de marche courant du manomètre, la position du manomètre selon notamment un système de positionnement par satellite, une information représentative d'une alarme ou d'un défaut de fonctionnement,
- le manomètre est conformé pour émettre à intervalle régulier un message de sécurité comportant des paramètres de sécurité, le système de traitement assurant la surveillance de ce message de sécurité par comparaison entre les messages successifs et/ou par comparaison dudit message de sécurité avec un message standard en vue de détecter et signaler une modification volontaire ou accidentelle du manomètre ou du dispositif,
- le manomètre est conformé pour émettre à intervalle régulier un numéro représentatif d'un emplacement prédéfini stocké dans l'unité électrique de façon à lier un identifiant unique avec une localisation, pour permettre d'affecter les messages radio vers un emplacement et dans une zone déterminée,
- le système de traitement comprend un organe de mesure de la puissance du signal reçu (RSSI) en provenance d'un manomètre et une logique de traitement pour corréler cette puissance à une distance calculée pour localiser le ou les manomètres correspondants,
- le système de traitement comprend un ou des récepteurs répéteurs réceptionnant et réémettant le message provenant d'un manomètre, le ou les récepteurs répéteurs assurant une légèrement modification du signal pour y inclure par exemple l'identifiant de ce récepteur et permettre ainsi sa localisation géographique,
- le manomètre peut comporter un système de reconnaissance d'un utilisateur ou d'un type d'utilisateur (identifiant par exemple avec type d'utilisateur ou niveau d'accès parmi plusieurs types prédéfinis) le manomètre autorisant des changements de configuration et/ou d'utilisation en fonction de l'utilisateur ou du type d'utilisateur transmettant des données de commande,
- la nature de la configuration peut être conditionnée à un ou des identifiants et/ou à un ou des types d'utilisateurs prédéfinis (par exemple un niveau d'accès ou d'autorisation autorise ou non la modification d'un ou plusieurs paramètres),
- chaque utilisateur du paramétrage peut posséder un identifiant propre comportant un niveau d'accès,
- les niveaux d'accès suivant peuvent être envisagés : fabricant du manomètre, monteur du manomètre sur récipient, gazier, opérateur de maintenance, opérateur (centre) de remplissage, opérateur de logistique, utilisateur du manomètre,
- l'unité électronique enregistre l'identifiant d'un utilisateur notamment ayant opéré un changement de configuration.

D'autres particularités et avantages apparaîtront à la lecture de la description ci-après, faite en référence aux figures dans lesquelles :
- la figure 1 représente une vue schématique et partielle illustrant un exemple de structure et de fonctionnement d'un manomètre électronique selon une réalisation possible de l'invention,
- la figure 2 représente une vue schématique illustrant un exemple de fonctionnement d'un manomètre électronique dans un système de traitement selon une réalisation possible de l'invention,
- la figure 3 représente une vue schématique et partielle illustrant la structure et le fonctionnement d'un manomètre électronique dans un système de traitement selon une réalisation possible de l'invention,
- la figure 4 représente une vue schématique et partielle illustrant un autre exemple de fonctionnement d'un manomètre électronique dans un système de traitement selon une réalisation possible de l'invention.

L'invention s'applique de façon préférentielle aux bouteilles de gaz à robinet avec ou sans détendeurs intégrés, de type industrielles ou médicales sur lesquels est monté un système de mesure de pression électronique (manomètre électronique).

L'invention peut également être montée et utilisée sur une conduite ou canalisation de fluides.

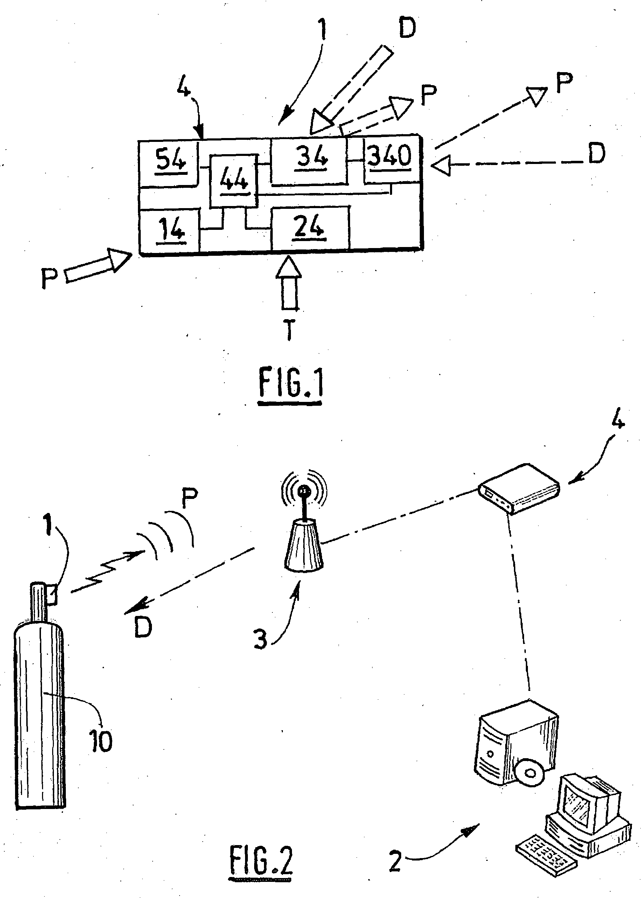

Comme représenté à la figure 1, le manomètre électronique 1 peut comporter au sein d'un même boîtier :
- un ou plusieurs capteurs 14 de pression P,
- une unité 44 de traitement électronique (type microprocesseur par exemple),
- un système 54 d'alimentation électrique sans fil (indépendant d'un réseau extérieur) tel qu'une pile, un accumulateur, une cellule photovoltaïque, un système par induction ou équivalent,
- au moins un système 34 d'information et/ou de communication comprenant une ou plusieurs radio 34, 340 décrites plus en détail ci-après.

Le manomètre 1 peut comporter également au moins l'un des éléments parmi:
- un ou plusieurs capteurs 24 de température T,
- un capteur de mouvement ou de déplacement,
- un capteur de luminosité ou un capteur sonore,
- un ou plusieurs boutons (une interface de saisie),
- un récepteur radio,
- un ou des écrans, un ou des voyants,
- un avertisseur sonore, un haut-parleur,
- un système de positionnement par satellite (type GPS par exemple).

De préférence, le mode de fonctionnement du manomètre et/ou les informations délivrées par ce dernier sont adaptées automatiquement à l'état de fonctionnement courant détecté en temps réel et comparé avec des modes de fonctionnement prédéfinis. Les modes de fonctionnement prédéfinis sont basés par exemple sur un cycle de variation de pression typique que le manomètre est susceptible de mesurer lors d'un cycle d'utilisation classique du récipient.

Le cycle d'utilisation d'une bouteille de gaz peut être représenté symboliquement selon une courbe de pression ou une boucle de pression fermée. Chaque mode de fonctionnement est défini par exemple par une gamme de pression et le mode de fonctionnement précédent selon un ordre chronologique prédéfini.

Le système peut alors adapter l'affichage de données et le fonctionnement du manomètre à l'état détecté. Par exemple, le manomètre peut
- afficher ou transmettre automatiquement les informations spécifiques pertinentes à l'état en cours
- envoyer des signaux d'alerte ou non en fonction des données mais aussi de l'état de fonctionnement.

Le comportement du manomètre et les informations présentées ou transmises à l'utilisateur peuvent ainsi s'adapter automatiquement en fonction du contexte et de l'utilisation en cours, sans intervention humaine par un bouton, un capteur ou un autre actionneur ce qui augmente l'ergonomie du système.

Le fait de pouvoir s'affranchir de moyens techniques ci-dessus (boutons, capteurs...) permet de simplifier la conception du manomètre, son coût et d'améliorer son étanchéité et sa fiabilité.

Ce système ou procédé peut s'appliquer de façon particulière et différente à une multitude d'applications industrielles et médicales.

L'unité 44 électronique peut ainsi comporter des paramètres mémorisés (re-paramétrables ou non) définissant différents états de fonctionnement et des modes de fonctionnement/communications (également re-paramétrables ou non) spécialement adaptés à ces états.

Par exemple, le système peut définir trois états de fonctionnement liés en boucle selon un ordre chronologique :
- utilisation, (entre un seuil bas S1 de pression de l'ordre par exemple de 5 à 10 bar et un premier seuil haut de pression S2 de l'ordre par exemple de 200 bar)
- vide ou en cours de remplissage, (entre le seuil bas S1 et un second seuil haut S3 de l'ordre par exemple de 220 bar).
- remplissage terminé/refroidissement (entre le second seuil haut S3 et le premier seuil haut S2).

L'état d'utilisation peut éventuellement lui-même être décomposé en deux « sous états » :
- en débit (= en soutirage ou utilisation), et
- en arrêt.

Le système peut définir et détecter un autre état indépendant du cycle : un état de veille correspondant par exemple à un état de stockage (manomètre arrêté ou démonté par exemple).

En fonction du mode de fonctionnement détecté à partir notamment de la pression P mesurée par le manomètre 1, le manomètre 1 peut effectuer ou modifier l'une ou l'une ou plusieurs des actions suivantes (liste donnée à titre d'exemple non limitatif) :
- afficher des données (pression, autonomie calculée...),
- transmettre sans fil des données (pression, autonomie...), par exemple toutes les minutes,
- admettre ou non la modification des paramétrages mémorisée (re-paramétrage),
- acquérir des données de pression P mesurées, par exemple toutes les 10 secondes,
- calculer une autonomie restante (fonction de la pression et du volume mémorisé ou paramétré de la bouteille), par exemple toutes les 10 à 30 secondes et la communiquer (affichage ou envoi sans fil),
- acquérir des données de température T mesurées, par exemple toutes les 60 secondes ou moins,
- vérifier l'état de la batterie périodiquement à des intervalles inférieurs à 24 heures.

Le manomètre 1 comporte une première radio 34 dite basse fréquence de réception de données D.

Cette première radio a une fréquence de communication de l'ordre, par exemple, de 125kHz. De préférence, la première radio est bidirectionnelle c'est à dire qu'elle est susceptible de recevoir des données D et également d'émettre des informations P dans cette gamme de fréquence.

A cet effet, la première radio 34 comprend un port de réception.

Par exemple le port de réception de la première radio 34 détecte ou interprète un champ magnétique émis et modulé (en fréquence et/ou amplitude) par un système externe. Le champ magnétique est modulé en fonction des données D à transmettre au manomètre 1.

La première radio 34 est également émettrice de données. De préférence, le manomètre ne consomme pas ou peu d'énergie pour l'émission mais s'appuie sur le champ magnétique D généré par le système externe. Par exemple la première radio 34 comporte un port d'émission apte à moduler le signal extérieur. Le système récepteur (antenne ou équivalent) peut alors décoder les différences entre le champ qu'il a lui même crée et le champ réel modifié par le manomètre 1 et en déduire l'information transmise par le manomètre 1. L'énergie de la transmission d'information P par le manomètre 1 est ainsi fournie essentiellement par le système extérieur, en général moins soumis à des contraintes d'alimentation électrique.

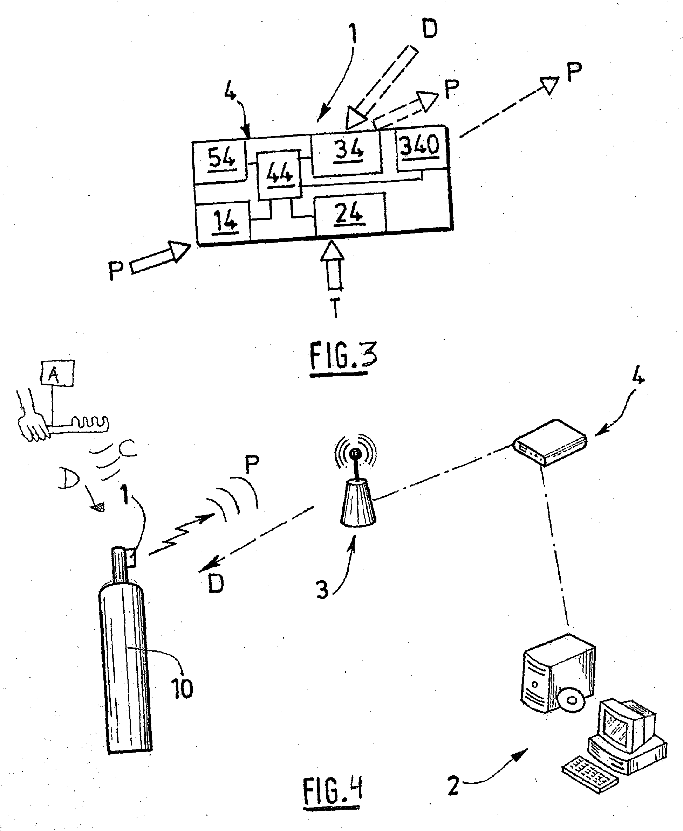

Dans un autre mode de fonctionnement possible le manomètre 1 peut recevoir des données D, par exemple par la détection d'un simple champ à sa fréquence (125KHz par exemple, cf. figure 4, antenne A manipulée manuellement). De préférence, le champ C émis vers la première radio 34 du manomètre 1 est non codé mais a une durée minimale prédéterminée. En réponse à ces données D transmises, le manomètre 1 peut effectuer alors une ou plusieurs actions de commandes prédéfinies ou dépendantes du contexte et des données D. La vérification de la durée minimale du signal par le manomètre 1 peut être utilisée pour distinguer le « message » d'un éventuel bruit ou parasite radio ambiant dans cette fréquence.

Ainsi, le manomètre peut fonctionner selon une communication unidirectionnelle (de l'extérieur vers le manomètre 1). Dans cette configuration, la première radio 34 réceptrice peut servir d'actionneur à distance, tel un bouton, mais sans contact. Ce fonctionnement est particulièrement avantageux par exemple :
- pour actionner un compteur au sein du manomètre 1,
- déclencher ou acquitter une alarme,
- commander une modification d'un affichage,...

In est possible de définir des données ou informations relatives au fonctionnement du manomètre 1 « statiques » ou « dynamiques ». Par « statique » on peut désigner par exemple les caractéristiques relatives à l'état du récipient ou du fluide qu'il contient (exemple : numéro de lot, identifient du récipient, date de péremption, seuils de pression définissant des états de fonctionnements mémorisés...). Ces données ou informations statiques peuvent être modifiées par une mise à jour extérieure par exemple, notamment par le biais de la première radio 34. Par « dynamique » on peut désigner des caractéristiques liées par exemple à la mesure d'une grandeur physique du fluide effectuée par le manomètre : pression, température relevées selon une fréquence d'échantillonnage. Cette fréquence d'échantillonnage peut également être une grandeur statique modifiable via la première radio 34.

Un intérêt de ce mode de réception est qu'il ne nécessite qu'un dispositif extrêmement simple et peut coûteux pour donner un ordre au manomètre 1. Par exemple, on peut envisager des systèmes externes d'activation transmettant des données : des appareils portables, badges, jetable, ou des émetteurs intégrés à des appareils environnants le récipient sur lequel est monté le manomètre 1 (montures de portes, portails, cadre ou panier de bouteilles....).

La distance de réception peut être relativement plus importante que dans le premier mode bi-directionnel décrit car le « message » à pas besoin d'être très précis ou rigoureux.

Avec le mode bidirectionnel de la première radio 34, il est ainsi possible de paramétrer et de configurer tout ou partie du fonctionnement du manomètre 1. Par exemple, il peut être adressé des données D de commande activant dans l'unité de stockage et de traitement de données 44 : un changement d'unité affiché ou transmis (pression, durée, température,... le volume mémorisé du récipient dans lequel la pression est mesurée, le numéro de série du récipient...).

Ce mode de réception peut ainsi correspondre à une écriture dans l'unité de stockage et de traitement de données 44. Une lecture (émission de la part du manomètre 1 peut être activée notamment pour des raisons de sécurité pour vérifier que l'écriture a été correctement faite.

L'émission d'informations P par la première radio 34 peut permettre ainsi de lire des valeurs calculées ou enregistrées dans le manomètre (unité 44), par exemple à la façon d'une « boite noire », ou des compteurs, des mesures ou valeurs exactes plus précises que celles affichées...

Comme représenté à la figure 1, le manomètre 1 comprend une seconde radio 340 émettrice. La seconde radio est dite « haute fréquence » fonctionne à une fréquence supérieure à celle de la première radio 34, par exemple autour de 433MHz.

Cette seconde radio peut être prévue plus spécifiquement à l'intention d'un ou plusieurs des récepteurs 3, 4, 2 (cf. figure 2) d'un système de traitement de données. Le manomètre 1 monté sur un récipient 10 peut ainsi émettre des informations P vers :
- un ou des récepteurs 4 sur réseau,
- sur ordinateur 2 de bureau ou un serveur, ou un ordinateur de poche,
- boîtiers 3 individuels de report de zone,
- un ou des récepteurs autonomes individuels de type « pager » (c'est à dire un petit boîtier autonome avec un écran et pas ou très peu de boutons pour recevoir et afficher les informations reçues par radio portés par des utilisateurs,
- un ou des récepteurs autonomes individuels déportés, fixés sur le même ensemble ou le même récipient, ceci par exemple afin d'afficher une information à un autre endroit du récipient que le manomètre lui-même (particulièrement intéressant pour pouvoir un afficheur ou l'orienter en évitant une liaison filaire fragile ou au contact d'un fluide),
- un ou plusieurs répéteur de signal qui peut réémettre le signal reçu du manomètre 1 avec une plus grande puissance (puisqu'il peut fonctionner avec une alimentation électrique supérieur, type secteur). En variante le répéteur de signal peut retransmettre le message via un autre type de radio ou de réseau. De même, ce répéteur peut avantageusement inclure dans le message retransmis sa propre position, fixe et connue, pour situer la zone autour de lui où se trouve le manomètre 1.

Le manomètre 1 (via notamment la seconde radio 340) peut émettre plusieurs type de données et notamment des messages contextuels fonctions de l'utilisation en cours du manomètre en cas de défaut. Le contenu des informations P mais également la fréquence d'émission peut être variable. Les informations peuvent inclure tout ou partie des informations suivantes :
- un numéro d'identifiant unique, soit du récipient 10, soit d'un robinet ou robinet-détendeur, soit du manomètre 1 lui-même,
- l'application en cours (logiciel de pilotage du manomètre 1), un numéro de version de ladite application,
- la contenance du récipient,
- la pression actuelle mesurée dans le récipient 10, éventuellement plus précise que celle affichée sur un écran du manomètre 1 ou à distance, ceci afin par exemple de permettre des traitements informatiques ou calculs par un récepteur 2 déporté,
- le volume de fluide du récipient (calculé),
- une information d'autonomie en fluide (calculée),
- le type de récipient 1 ou de détendeur monté sur le récipient sur lequel
- est branché le manomètre 1,
- le niveau de l'alimentation (pile) du manomètre 1,
- l'état de marche du manomètre 1,
- une position (type GPS),
- une alarme ou l'avertissement d'un défaut.

De préférence le manomètre 1 émet à intervalle régulier un message dit « de sécurité » comportant par exemple des paramètres concernant la sécurité (pression température...) et éventuellement une combinaison de paramètres impactant le bon fonctionnement du manomètre. Ce message de sécurité peut être surveillé par un récepteur 2 extérieur. Cette surveillance peut être effectuée par exemple par comparaison entre les messages de sécurité successifs et/ou par comparaison des messages de sécurité par rapport à un message type. De cette façon, un système de traitement extérieur peut détecter de manière simple et ainsi avertir lors d'une modification volontaire ou accidentelle même très petite mais impactant la sécurité du manomètre 1 ou de l'installation.

Le manomètre 1 (via notamment la seconde radio 340) peut également émettre des informations P à intervalle régulier, par exemple : un numéro d'emplacement prédéfini par l'utilisateur. Il est ainsi possible de coupler un n° d'identifiant du récipient 10 ou manomètre 1 et une localisation. Ceci permet d'affecter les messages radio « normaux » à un emplacement ou une application.

Le manomètre 1 peut également émettre via la seconde radio 340 des informations P sous la forme d'une trame à émission forcée par la première radio 34. C'est-à-dire que les données D reçues par la première radio 34 peuvent comprendre une commande automatique forçant une (ré)émission prédéfinie d'informations par la seconde radio 340. Il peut s'agir d'un message prédéfini, d'un message contextuel (fonction de l'état en cours d'utilisation notamment) ou d'informations spécifiquement reçues et transmises par la première radio 34.

Lorsque la localisation du manomètre (c'est-à-dire du récipient 10 auquel il est attaché) est nécessaire avec une précision plus importante, la puissance d'émission de la ou des radios 34, 340 est choisie relativement faible (environ 10 mètres par exemple, et le système de traitement comprend un grand nombre de récepteurs 3 ou de répéteurs placés à des positions déterminées connues.

- Le récepteur mesurant la force du signal reçu (proportionnel notamment à la distance entre l'émetteur 34, 34 et le récepteur 3), il est possible d'avoir une indication de la distance à laquelle se trouve le manomètre 1 émetteur du signal (technique « RSSI »: « Receiver Signal Strengh Indicator »).

Dans le cas d'un ensemble de récepteurs 3, 4 fonctionnant en collaboration, il est en plus possible de localiser le manomètre 1 autour du récepteur recevant le signal de plus grande intensité (éventuellement pondérée par un facteur lié à son environnement plus ou moins favorable).

Dans le cas d'utilisation de répéteurs de signal, le message radio réémis peut être légèrement modifiée à la première réémission pour inclure par exemple une information supplémentaire telle que l'identifiant de ce récepteur et ainsi permettre une localisation géographique.

Le système selon l'invention peut ainsi avoir un fonctionnement prédictif et de fait une consommation électrique connue. En effet, dès la conception il est possible de définir l'ensemble des messages radios qui seront émis dans la vie du manomètre 1, et ceci indépendamment du nombre d'autres manomètres 1 adjacents (à l'inverse, les systèmes radio classiques fonctionnent avec une logique de type réseau où, pour éviter des chevauchements les appareils « s'écoutent » les uns les autres et donc se comportent différemment selon leur nombre dans une même zone).

La fiabilité du système d'émission par le manomètre 1 selon l'invention peut être augmentée notamment par :
- la répétition du même message,
- les intervalles de temps aléatoires entre chaque répétition de message,
- une éventuelle reconstruction par le récepteur d'un message correct à partir de messages tous défectueux,
- la très courte durée des messages qui limite statistiquement un recoupement des messages des différents manomètres.

Dans le cas de deux radios 34, 340 le manomètre peut bénéficier des spécificités des deux types de radio mais aussi utiliser des fonctions nouvelles réalisées par leur collaboration comme décrit ci-dessus.

Le manomètre 1 est utilisé et piloté de préférence de façon solliciter chacune des radios 34, 340 dans leur configuration de consommation la plus faible. Ainsi, en mode émission d'informations P, la seconde radio 34, 340 haute fréquence est préférée. La réception est réalisée par la première radio basse fréquence utilisant un minimum d'énergie (extérieure).

Au contraire, les systèmes connus comportent une unique radio émettrice optimisée pour la seule émission de données.

Cette répartition des fonctions dans des radios distinctes dédiées limite fortement la consommation électrique du manomètre 1 qui peut de ce fait fonctionner pendant une longue période avec une même pile (plusieurs années). Ceci limite ou rend inutile les opérations de changement de pile et procure un gain économique notable en permettant notamment de s'affranchir sur le manomètre 1 d'un système d'accès à la pile.

L'invention concerne également un procédé de pilotage d'un manomètre ou de traitement d'information depuis ou vers un manomètre comprenant tout ou partie des caractéristiques ci-dessus.

## Revendications

1. Manomètre électronique de mesure de la pression (P) régnant à l'intérieur d'un récipient, notamment une bouteille de gaz sous pression, ledit manomètre (1) comprenant au moins un capteur (14) de pression, une unité électronique (44) conformée pour l'acquisition, le stockage et le traitement de données, au moins un dispositif d'information (34) apte à transmettre au moins une information (P), le manomètre comportant une première radio (34) comprenant un port de réception, la première radio (34) étant reliée à l'unité électronique (44) pour recevoir des données (D) extérieures en vue de modifier le fonctionnement ou la configuration du manomètre (1), le port de réception de la première radio (34) étant conformé pour lire des données modulées en fréquence et/ou modulées en intensité d'un champ magnétique extérieur à une première fréquence dite basse, comprise entre 50 et 300KHz, la première radio comportant un premier port d'émission radio relié à l'unité électronique (44) pour émettre des informations (P) à partir du manomètre (1), le premier port d'émission et le port de réception de la première radio (34) ayant une fréquence de fonctionnement sensiblement identique en émission et en réception, **caractérisé en ce qu'**il comporte une seconde radio (340) comprenant uniquement un port d'émission, la seconde radio (340) étant reliée à l'unité électronique (44) pour émettre sans fil des informations (P) notamment concernant le fonctionnement du manomètre (1), le port d'émission de la seconde radio (340) conformé pour émettre des données par modulation de fréquence et/ou modulation d'intensité d'un champ magnétique à une seconde fréquence dite haute, supérieure à la première fréquence de la première radio (34).

2. Manomètre selon la revendication 1, **caractérisé en ce que** la seconde fréquence est comprise entre 300 KHz et 800 MHz.

3. Manomètre selon la revendication 1 or 2, **caractérisé en ce que** l'unité électronique (44) est conformée pour stocker et traiter des premières données dites statiques telles que des informations relatives à l'état ou à l'identité d'un récipient ou du fluide contenu dans ledit récipient, et **en ce que** la première radio (34) est conformée pour recevoir des premières données (D) statiques en vue de leur écriture ou réécriture dans unité électronique (44) pour modifier le fonctionnement ou de la configuration du manomètre (1).

4. Manomètre selon l'une quelconque des revendications 1 à 3, **caractérisé en ce que** la première radio (34) ou l'unité électronique (44) comporte un filtre conformé pour filtrer une transmission simplifiée de données (D) extérieures par rapport à du bruit en ne tenant compte que des signaux reçus ayant une durée de transmission supérieure à un seuil de préférence égal à 100 ms environ.

5. Manomètre selon l'une quelconque des revendications 1 à 4, **caractérisé en ce que** le premier port d'émission radio (34) comprend un modulateur de champ magnétique conformé pour moduler un champ magnétique extérieur adressé au manomètre (1).

6. Manomètre selon l'une quelconque des revendications 1 à 5, **caractérisé en ce que** le premier port de réception de la première radio comprend un module de détection d'un simple champ magnétique non codé d'une fréquence et durée déterminée, l'unité électronique du manomètre étant conformée pour exécuter une ou plusieurs actions de commande prédéfinies en fonction des données (D) du champ magnétique détecté ou/et du contexte.

7. Manomètre selon l'une quelconque des revendications 1 à 6, **caractérisé en ce que** l'unité électronique (44) est conformée pour commander l'émission d'informations (P) par la seconde radio (340) en réponse à un signal de commande reçu par la première radio (34).

8. Utilisation d'un manomètre selon l'une quelconque des revendications 1 à 7, **caractérisé en ce que** l'unité électronique est conformée pour réémettre une ou des données par la seconde radio des informations reçues par la première radio, les informations ou données incluent tout ou partie des informations suivantes : un numéro d'identifiant du récipient et/ou d'un robinet ou robinet-détendeur monté sur le récipient et/ou du manomètre lui-même, le mode de fonctionnement en cours du récipient, l'application informatique de commande du manomètre stocké dans l'unité électronique (44), un numéro de version de programme de commande du manomètre stocké dans l'unité électronique (44), la valeur de contenance maximale du récipient, la valeur de pression actuelle mesurée, le volume de fluide courant calculé dans le récipient, une durée d'autonomie calculée à partir de la pression courante mesurée, le type de récipient ou de détendeur rapporté sur le récipient parmi plusieurs types prédéfinis, le niveau de charge de l'alimentation électrique du manomètre, l'état de marche courant du manomètre, la position du manomètre selon notamment un système de positionnement par satellite, une information représentative d'une alarme ou d'un défaut de fonctionnement.

9. Système de traitement d'au moins une information relative à au moins un récipient de fluide sous pression comprenant un manomètre (1) conforme à l'une quelconque des revendications 1 à 7, **caractérisé en ce que** le système de traitement comprend un organe (3) d'émission de données (D) vers le manomètre (1).

10. Système selon la revendication 9, le manomètre (1) comprenant au moins un premier port d'émission radio relié à l'unité électronique (44), ledit système de traitement comprenant au moins un organe de réception parmi : plusieurs récepteurs radio reliés en réseau, un ordinateur (2), un récepteur (3) de report destiné à retransférer les données à distance, un récepteur déporté par comprenant un système d'affichage déporté par rapport au manomètre (1).

11. Système selon la revendication 9 ou 10, **caractérisé en ce qu'**il comprend un ou des récepteurs répéteurs réceptionnant et réémettant le message provenant d'un manomètre, le ou les récepteurs répéteurs assurant une légèrement modification du signal pour y inclure par exemple l'identifiant de ce récepteur et permettre ainsi sa localisation géographique.

12. Système selon l'une quelconque des revendications 9 à 11, **caractérisé en ce que** le manomètre est conformé pour émettre à intervalle régulier un message de sécurité comportant des paramètres de sécurité, le système de traitement assurant la surveillance de ce message de sécurité par comparaison entre les messages successifs et/ou par comparaison dudit message de sécurité avec un message standard en vue de détecter et signaler une modification volontaire ou accidentelle du manomètre ou du dispositif.

## Patentansprüche

1. Elektronisches Druckmessgerät zum Messen des Drucks (P), der im Inneren eines Behälters, vor allem in einer unter Druck stehenden Gasflasche herrscht, wobei das besagte Druckmessgerät (1) zumindest einen Drucksensor (14) umfasst, eine Elektronikeinheit (44), die zur Aufnahme, Ablage und Verarbeitung von Daten ausgeführt ist, zumindest eine Informationsvorrichtung (34), die in der Lage ist, zumindest eine Information (P) zu übertragen, wobei das Druckmessgerät einen ersten Funk (34) umfasst, der einen Empfänger-Port umfasst, wobei der erste Funk (34) mit der Elektronikeinheit (44) verbunden ist, um externe Daten (D) zu empfangen, die den Betrieb oder die Konfiguration des Druckmessgerätes (1) ändern, wobei der Empfänger-Port des ersten Funks (34) ausgeführt ist, um frequenzmodulierte und/ oder intensitätsmodulierte Daten eines äußeren Magnetfelds mit einer ersten, niedrig genannten Frequenz zu lesen, die zwischen 50 und 300 KHz beträgt, wobei der erste Funk einen ersten Funksender-Port umfasst, der mit der Elektronikeinheit (44) verbunden ist, um Informationen (P) aus dem Druckmessgerät (1) zu senden, wobei der erste Sender-Port und der Empfänger-Port des ersten Funks (34) eine in etwa identische Betriebsfrequenz beim Senden und Empfangen aufweisen, **dadurch gekennzeichnet, dass** es einen zweiten Funk (340) umfasst, der nur einen Sender-Port umfasst, wobei der zweite Funk (340) mit der Elektronikeinheit (44) verbunden ist, um drahtlos Informationen (P) vor allem in Bezug auf den Betrieb des Druckmessgerätes (1) zu senden, wobei der Sender-Port des zweiten Funks (340) ausgeführt ist, um Daten durch Frequenz- und/ oder Intensitätsmodulation eines Magnetfelds mit einer zweiten, hoch genannten Frequenz zu senden, die höher ist, als die erste Frequenz des ersten Funks (34).

2. Druckmessgerät nach Anspruch 1, **dadurch gekennzeichnet, dass** die zweite Frequenz zwischen 300 KHz und 800 MHz liegt.

3. Druckmessgerät nach Anspruch 1 oder 2, **dadurch gekennzeichnet, dass** die Elektronikeinheit (44) ausgeführt ist, um erste statisch genannte Daten, wie Informationen über den Zustand oder die Identität eines Behälters oder eines Fluids, das im besagten Behälter enthalten ist, abzulegen und zu bearbeiten, und dadurch, dass der erste Funk (34) ausgeführt ist, um erste statische Daten (D) zu empfangen, um sie in der Elektronikeinheit (44) zu lesen und umzuschreiben, um den Betrieb oder die Konfiguration des Druckmessgerätes (1) zu ändern.

4. Druckmessgerät nach irgendeinem der Ansprüche 1 bis 3, **dadurch gekennzeichnet, dass** der erste Funk (34) oder die Elektronikeinheit (44) einen Filter umfasst, der ausgeführt ist, um eine vereinfachte Übertragung externer Daten (D) im Verhältnis zu einem Geräusch zu filtern, indem man nur empfangene Signale berücksichtigt, deren Übertragungsdauer über einem Grenzwert von vorzugsweise etwa 100 ms liegt.

5. Druckmessgerät nach irgendeinem der Ansprüche 1 bis 4, **dadurch gekennzeichnet, dass** der erste Funksender-Port (34) einen Magnetfeldmodulator umfasst, der ausgeführt ist, um ein äußeres Magnetfeld zu modulieren, das dem Druckmessgerät (1) geschickt wurde.

6. Druckmessgerät nach irgendeinem der Ansprüche 1 bis 5, **dadurch gekennzeichnet, dass** der erste Empfänger-Port des ersten Funks ein Modul zum Erkennen eines einfachen nicht codierten Magnetfelds einer bestimmten Frequenz und Dauer umfasst, wobei die Elektronikeinheit des Druckmessgerätes ausgeführt ist, um in Abhängigkeit von den Daten (D) des erkannten Magnetfelds oder/ und des Kontexts einen oder mehrere vorbestimmte Steuervorgänge auszuführen.

7. Druckmessgerät nach irgendeinem der Ansprüche 1 bis 6, **dadurch gekennzeichnet, dass** die Elektronikeinheit (44) ausgeführt ist, um die Sendung von Informationen (P) durch den zweiten Funk (340) als Reaktion auf ein Steuersignal anzusteuern, das vom ersten Funk (34) empfangen wurde.

8. Verwendung eines Druckmessgerätes nach irgendeinem der Ansprüche 1 bis 7, **dadurch gekennzeichnet, dass** die Elektronikeinheit ausgeführt ist, um über den zweiten Funk ein Datum oder Daten der Informationen weiterzusenden, die vom ersten Funk empfangen worden sind, wobei die Informationen oder Daten alle folgenden Informationen oder einen Teil davon enthalten: eine Identifizierungsnummer des Behälters und/ oder eines Ventils oder Druckminderventils, das auf dem Behälter montiert ist, und / oder eines Druckmessgerätes selbst, den aktuellen Betriebsmodus des Behälters, die Steuerelektronik-Anwendung des Druckmessgerätes, die in der Elektronikeinheit (44) gespeichert ist, eine Steuerprogramm-Versionsnummer des Druckmessgerätes, die in der Elektronikeinheit (44) gespeichert ist, den Wert für das maximale Fassungsvermögen im Behälter, den aktuellen Druckmesswert, das berechnete aktuelle Fluidvolumen im Behälter, eine ausgehend vom aktuellen gemessenen Druck berechnete Autonomiedauer, den Behältertypen oder den aus mehreren definierten Typen ausgewählten Typen des auf dem Behälter angebrachten Druckminderventils, den elektrischen Ladezustand des Druckmessgerätes, den aktuellen Betriebsstatus des Druckmessgerätes, die Position des Druckmessgerätes vor allem laut Angabe eines Satelliten-Positionierungssystems, eine repräsentative Information eines Alarms oder einer Betriebsstörung.

9. System zum Bearbeiten zumindest einer Informationen in Bezug auf zumindest einen unter Druck stehenden Fluidbehälter, ein Druckmessgerät (1) nach irgendeinem der Ansprüche 1 bis 7 umfassend, **dadurch gekennzeichnet, dass** das Bearbeitungssystem ein Element (3) zum Senden von Daten (D) zum Druckmessgerät (1) umfasst.

10. System nach Anspruch 9, wobei das Druckmessgerät (1) zumindest einen Funksender-Port umfasst, der mit der Elektronikeinheit (44) verbunden ist, und das besagte System zum Bearbeiten zumindest eines der folgenden Empfangselemente umfasst: mehrere vernetzte Funkempfänger, einen Computer (2), einen Verlagerungsempfänger (3), der dazu bestimmt ist, die Daten aus der Entfernung weiter zu übertragen, einen ausgelagerten Empfänger, ein im Verhältnis zum Druckmessgerät (1) ausgelagertes Anzeigesystem umfassend.

11. System nach Anspruch 9 oder 10, **dadurch gekennzeichnet, dass** es einen oder mehrere Empfänger-Verstärker umfasst, die die Nachricht aus einem Druckmessgerät empfangen und weitersenden, wobei der oder die Empfänger-Verstärker eine leichte Änderung des Signals vornehmen, um beispielsweise die Identifizierung dieses Empfängers einzufügen, und um somit seine geografische Lokalisierung zu ermöglichen.

12. System nach irgendeinem der Ansprüche 9 bis 11, **dadurch gekennzeichnet, dass** das Druckmessgerät ausgeführt ist, um in regelmäßigen Abständen eine Sicherheitsnachricht zu senden, die Sicherheitsparameter umfasst, wobei das Bearbeitungssystem durch den Vergleich der sukzessiven Nachrichten und/ oder durch den Vergleich der besagten Sicherheitsnachricht mit einer Standardnachricht für die Überwachung dieser Sicherheitsnachricht sorgt, um eine absichtliche oder ungewollte Änderung des Druckmessgerätes oder der Vorrichtung zu erkennen und zu melden.

## Claims

1. Electronic pressure gauge for measuring the pressure (P) inside a container, particularly a pressurised gas cylinder, said pressure gauge (1) including at least one pressure sensor (14), an electronic unit (44) designed to acquire, store and process data, and at least one information device (34) capable of transmitting at least one item of information (P), the pressure gauge including a first radio (34) having a reception port, the first radio (34) being connected to the electronic unit (44) so as to receive external data (D) in order to modify the operation or the configuration of the pressure gauge (1), the reception port of the first radio (34) being designed to read data modulated in terms of the frequency and/or intensity of an external magnetic field at a first low frequency between 50 and 300 KHz, the first radio including a first radio transmission port connected to the electronic unit (44) in order to transmit information (P) from the pressure gauge (1), the first transmission port and the reception port of the first radio (34) having a substantially identical transmission and reception operating frequency, **characterised in that** it includes a second radio (340) having only a transmission port, the second radio (340) being connected to the electronic unit (44) for the wireless transmission of information (P), in particular information relating to the operation of the pressure gauge (1), the transmission port of the second radio (340) being designed to transmit data by modulation of the frequency and/or intensity of a magnetic field at a second high frequency, above the first frequency of the first radio (34).

2. Pressure gauge according to claim 1, **characterised in that** the second frequency is between 300 KHz and 800 MHz.

3. Pressure gauge according to claim 1 or 2, **characterised in that** the electronic unit (44) is designed to store and process the first data, referred to as static data, such as information on the state or identity of a container or of the fluid contained in said container, and **in that** the first radio (34) is designed to receive first static data (D) in order to write or re-write this data in the electronic unit (44) to modify the operation or configuration of the pressure gauge (1).

4. Pressure gauge according to any one of claims 1 to 3, **characterised in that** the first radio (34) or the electronic unit (44) includes a filter designed to filter a simplified transmission of external data (D) in relation to noise by only taking into account the received signals having a transmission duration longer than a preferred threshold equal to about 100 ms.

5. Pressure gauge according to any one of claims 1 to 4, **characterised in that** the first radio transmission port (34) includes a magnetic field modulator designed to modulate an external magnetic field intended for the pressure gauge (1).

6. Pressure gauge according to any one of claims 1 to 5, **characterised in that** the first reception port of the first radio includes a detection module for detecting a single non-encoded magnetic field at a determined frequency and over a determined duration, the electronic unit of the pressure gauge being designed to execute one or more pre-set control actions as a function of the data (D) of the magnetic field detected and/or the context.

7. Pressure gauge according to any one of claims 1 to 6, **characterised in that** the electronic unit (44) is designed to control the transmission of information (P) by the second radio (340) in response to a control signal received by the first radio (34).

8. Use of a pressure gauge according to any one of claims 1 to 7, **characterised in that** the electronic unit is designed to re-transmit one or more data items by the second radio of the information received by the first radio, the information or data including all or part of the following information: an identifier number of the recipient and/or of a valve or an expansion valve assembled on the container and/or on the pressure gauge itself, the current operating mode of the container, the computer application for controlling the pressure gauge stored in the electronic unit (44), a version number of the programme for controlling the pressure gauge stored in the electronic unit (44), the maximum content value of the container, the current pressure value measured, the current fluid volume calculated in the container, an autonomy duration calculated from the current pressure measured, the type of container or expansion valve connected to the container from several pre-set types, the level of electrical power load of the pressure gauge, the current operating state of the pressure gauge, the position of the pressure gauge, in particular according to a satellite-based positioning system, and information representative of an alarm or operating error.

9. System for processing at least one item of information regarding at least one pressurised fluid container including a pressure gauge (1) as per any one of claims 1 to 7, **characterised in that** the processing system includes a member (3) for transmitting data (D) to the pressure gauge (1).

10. System according to claim 9, wherein the pressure gauge (1) includes at least one first radio transmission port connected to the electronic unit (44), said processing system including at least one reception member from the following: several radio receivers connected via a network, a computer (2), a transfer receiver (3) intended to re-transfer the data remotely, and an offset receiver including a display system that is offset in relation to the pressure gauge (1).

11. System according to claim 9 or 10, **characterised in that** it includes one or more repeater receivers receiving and re-transmitting the message originating from a pressure gauge, the one or more repeater receivers making a slight modification to the signal so that it includes, for example, the identification of this receiver and to thus enable its geolocation.

12. System according to any one of claims 9 to 11, **characterised in that** the pressure gauge is designed to transmit a safety message at regular intervals, said safety message including safety parameters, the processing system performing the surveillance of this safety message by comparing successive messages and/or by comparing said safety message with a standard message in order to detect and report a voluntary or accidental modification of the pressure gauge or of the device.
